# EUROPEAN PATENT APPLICATION

(11) **EP 2 868 825 A1**
(43) Date of publication of application: **06.05.2015**
(21) Application number: 13809005.5
(22) Date of filing: 27.06.2013
(51) Int. Cl.: E04B 1/76, A01G 9/14, C08K 3/20, C08L 101/00, E04D 1/28, E06B 5/00

(54) **HEAT SHIELDING MATERIAL**

(30) Priority: 29.06.2012 JP 2012146857
(71) Applicant: Kyowa Chemical Industry Co., Ltd, Takamatsu-shi, Kagawa 761-0113 (JP); Sea Water Chemical Institute Inc., Fukuoka 807-1123 (JP)
(72) Inventor: NAKAMURA Tsukasa, Sakaide-shi Kagawa 762-0012 (JP); MANABE Hitoshi, Sakaide-shi Kagawa 762-0012 (JP); KUDO Daisuke, Sakaide-shi Kagawa 762-0012 (JP); MIYATA Shigeo, Kitakyushu-shi Fukuoka 807-1123 (JP)
(74) Representative: Raynor, Stuart Andrew
(86) International application number: PCT/JP2013/068305
(87) International publication number: WO 2014/003201

(57) **Abstract**

A heat shielding material which is excellent in the reflection of infrared light which causes a temperature rise and visible light transmission.

The heat shielding material comprises high-aspect ratio plate-like crystal magnesium hydroxide having a crystal width of not less than 1 µm and a crystal thickness of not more than 0.2 µm as an effective component.

## Description

### TECHNICAL FIELD

The present invention relates to a heat shielding material which is excellent in infrared reflecting ability and visible light transmission.

### BACKGROUND ART

Energy prices are becoming higher and higher and therefore energy saving is a common issue in a wide variety of fields. A method of suppressing a rise in room temperature by sunlight during summer by applying thermal barrier paint to roofs or by affixing a resin film containing a heat shielding material to windows is spreading rapidly. Also, in the agricultural field, a heat shielding film or sheet is used to prevent the inside temperature of a greenhouse from rising higher than required so as to keep crops growing well though it transmits visible light.

Heat shielding materials used in these heat shielding products include metal flakes such as aluminum and silver flakes, titanium oxide, zinc oxide and pearl pigments. These heat shielding materials reflect infrared light which causes a temperature rise and prevent a rise in room temperature during summer and a reduction in room temperature during winter. However, these heat shielding materials have defects that they have low transparency, the surface of a molded product is rough and they are easily colored. Therefore, when these heat shielding materials are affixed to a window, visibility becomes poor. Further, since visible light required for a plant is rarely transmitted through the heat shielding material, the growth of a plant in an agricultural greenhouse may be retarded. Also, there is a problem that it is difficult to manufacture transparent or colorless paint.

### DISCLOSURE OF THE INVENTION

It is an object of the present invention to provide a heat shielding material which is excellent in ability to reflect infrared light which causes a temperature rise and visible light transmission. It is another object of the present invention to provide a resin composition comprising this heat shielding material and a molded article thereof.

The inventors of the present invention found that high-aspect ratio plate-like crystal magnesium hydroxide is excellent in infrared reflecting ability and visible light transmission. The present invention was accomplished based on this finding.

That is, the present invention is a heat shielding material which comprises plate-like crystal magnesium hydroxide having a crystal width of not less than 1 µm and a crystal thickness of not more than 0.2 µm as an effective component. The present invention is also a resin composition which comprises 100 parts by weight of a resin and 1 to 50 parts by weight of the above heat shielding material. The present invention is further a molded article obtained by molding the above resin composition. The present invention is still further a method of using plate-like crystal magnesium hydroxide having a crystal width of not less than 1 µm and a crystal thickness of not more than 0.2 µm as an infrared heat shielding material.

### BEST MODE FOR CARRYING OUT THE INVENTION

### <heat shielding material>

### (high-aspect ratio plate-like crystal magnesium hydroxide)

The heat shielding material of the present invention comprises a high-aspect ratio plate-like crystal magnesium hydroxide having a large crystal width and a small crystal thickness as an effective component. The crystal width of the high-aspect ratio plate-like crystal magnesium hydroxide is not less than 1 µm, preferably not less than 2 µm, more preferably not less than 3 µm. The crystal thickness is not more than 0.2 µm, preferably not more than 0.1 µm, more preferably not more than 0.05 µm.

The above plate-like crystal magnesium hydroxide is excellent in orientation in a resin and has a high light reflectance. As a result, it reflects infrared light well which causes a temperature rise to reduce its transmittance. The aspect ratio is defined as crystal width/thickness ratio.

As the crystal width of the high-aspect ratio plate-like crystal magnesium hydroxide becomes larger, orientation (the molding surface and the crosswise direction of the crystal become parallel to each other) becomes higher, whereby almost specular reflection is achieved, resulting in an improved heat shielding effect. Meanwhile, as the crystal thickness becomes smaller, visible light transmittance improves, whereby transparency becomes higher. The conventional magnesium hydroxide crystal has a width of about not more than 1 µm and a thickness of about not less than 0.5 µm. Therefore, as the crystal has poor orientation and large thickness, it has low transparency, resulting in a small heat shielding effect.

The high-aspect ratio plate-like crystal magnesium hydroxide may be surface treated before use in order to improve compatibility with and dispersibility in a resin. As the surface treatment agent, a coupling agent selected from higher fatty acids, alkali metal salts thereof, phosphoric acid esters, anionic surfactants, silane, aluminum and titanates is used. The surface treatment may be carried out by a wet process in which 0.1 to 10 wt% based on the weight of the high-aspect ratio plate-like crystal magnesium hydroxide of the surface treatment agent is dissolved in water or an organic solvent such as alcohol and the resulting solution is added to the high-aspect ratio plate-like crystal magnesium hydroxide in a liquid medium such as water under agitation. Alternatively, the heat treatment may be carried out by a so-called dry process in which the above surface treatment agent is added to plate-like crystal magnesium hydroxide powders under agitation by means of a stirrer such as a Henschel mixer.

The plate-like crystal magnesium hydroxide may be molded into a granular form having a diameter of 0.5 to 5 mm in order to increase its bulk density so as to improve workability at the time of kneading with a resin. Molding may be carried out by using conventionally known means such as extrusion granulation or tumbling granulation.

### (production of high-aspect ratio plate-like crystal magnesium hydroxide)

The high-aspect ratio plate-like crystal magnesium hydroxide may be produced by carrying out hydrothermal processing in the coexistence of fine crystal magnesium hydroxide and a monocarboxylic acid or a metal salt thereof at 100°C or higher, preferably 150 to 250°C for 2 to 10 hours under agitation.

The monocarboxylic acid may be hydrothermally processed after it is coprecipitated with an alkali such as sodium hydroxide by adding it to a water-soluble magnesium salt such as magnesium halide, nitrate or monocarboxylate before a coprecipitation reaction when magnesium hydroxide is produced by a coprecipitation method in which an equivalent amount or more of an alkali such as NaOH is added to a water-soluble magnesium salt aqueous solution to carry out a reaction at 0 to 40°C. The monocarboxylic acid is added to magnesium hydroxide in a molar ratio of preferably not less than 0.01, more preferably 0.1 to 1.0.

Preferred examples of the water-soluble magnesium salt include magnesium chloride, magnesium nitrate and magnesium acetate. Preferred examples of the monocarboxylic acid include acetic acid, propionic acid, butanoic acid, glycolic acid and lactic acid.

### <resin composition>

The resin composition of the present invention comprises 100 parts by weight of a resin and 1 to 50 parts by weight of the above heat shielding material.

The resin is preferably at least one selected from the group consisting of thermoplastic resins, thermosetting resins and rubbers. Examples of the resin include thermoplastic resins such as polyethylene, copolymers of ethylene and an α-olefin, copolymer of ethylene and vinyl acetate, ethyl acrylate or methyl acrylate, polypropylene, copolymers of propylene and another α-olefin, polybutene-1, poly4-methylpentene-1, polystyrene, copolymer of styrene and acrylonitrile, copolymer of ethylene and propylene diene rubber or butadiene, polyvinyl acetate, polyvinyl alcohols, polyacrylates, polymethacrylates, polyurethanes, polyesters, polyethers, polyamides, ABS, polycarbonates and polyphenylene sulfide, thermosetting resins such as phenol resin, melamine resin, epoxy resin, unsaturated polyester resin and alkyd resin, EPDM, SBR, NBR, copolymer rubbers of ethylene and another α-olefin such as propylene or octene, butyl rubber, chloroprene rubber, isoprene rubber, chlorosufonated rubber, silicone rubber, fluorine rubber, chlorinated butyl rubber, brominated butyl rubber, epichlorohydrin rubber and chlorinated polyethylene rubber.

The resin composition is, for example, thermal barrier paint. In this case, phenol resin paint, alkyd resin paint, aminoalkyd resin paint, vinyl chloride resin paint, acrylic resin paint, epoxy resin paint, silicon resin paint, polyurethane resin paint, fluorine resin paint or oily paint may be contained as the resin.

The content of the heat shielding material in the resin composition is 0.1 to 100 parts by weight, preferably 1 to 50 parts by weight based on 100 parts by weight of the resin.

The resin composition may be produced by conventionally known kneading means after the resin and the above heat shielding material are mixed together. For example, it may be produced by thermally melting and mixing together the resin and the heat shielding material by means of a double-screw extruder and pelletizing the resulting mixture.

### <molded article>

A molded article can be obtained by molding the resin composition by means of a commonly used molding machine or means such as extrusion molding, injection molding, vacuum forming, inflation molding or slit molding into a film, sheet or thick molded article. Examples of the molded article include heat shielding films to be affixed to windows, thermal barrier paints to be used for roofs, agricultural heat shielding films or sheets for adjusting the inside temperature of a greenhouse, and resin molded articles for outdoor use.

### <method of using as heat shielding material>

The present invention includes a method of using high-aspect ratio plate-like crystal magnesium hydroxide having a crystal width of not less than 1 µm and a crystal thickness of not more than 0.2 µm as an infrared heat shielding material.

### EXAMPLES

The following examples are provided for the purpose of further illustrating the present invention but are in no way to be taken as limiting.

### Example 1

### (preparation of magnesium hydroxide)

8 L of a 8 mol/L sodium hydroxide aqueous solution as an extra pure reagent (30°C) was added to 20 L of a mixed aqueous solution of magnesium chloride and sodium acetate (Mg = 2 mol/L, sodium acetate = 1.2 mol/L, 30°C) as an extra pure reagent under agitation to carry out a coprecipitation reaction. This reaction product was fed to an autoclave having a capacity of 50 L to carry out a hydrothermal processing at 170°C for 8 hours. The hydrothermally processed product was taken out, filtered under reduced pressure and rinsed, and the obtained filter cake was dispersed into water by a stirrer. After heating at about 80°C, 1 L of an aqueous solution obtained by neutralizing 40 g of stearic acid (purity of 90 %) with caustic soda and thermally dissolving it was added to the resulting dispersion under agitation to carry out a surface treatment. Thereafter, a cake obtained by pressure filtering and rinsing was granulated to a diameter of about 2 mm by means of a double-screw extruder for granulation and dried at about 120°C in an oven.

Part of a specimen before the surface treatment was sampled to measure its BET specific surface area by X-ray diffraction, SEM and liquid nitrogen adsorption method.

As a result of X-ray diffraction, it was identified as magnesium hydroxide. As a result of SEM measurement, each crystal was an almost hexagonal plate-like crystal having a thickness of 0. 07 µm and a width of 3.2 µm. Therefore, the aspect ratio was 50. The BET specific surface area was 12 m²/g.

### (molding of sheet)

100 parts by weight of LLDPE (linear low-density polyethylene) was mixed with 10 parts by weight of the granulated product and 0.1 part by weight of an antioxidant (Irganox 1010) and melt kneaded with these substances by means of a Brabender. The kneaded product was molded into a sheet having a thickness of 1 mm, a length of 134 mm and a width of 99 mm by means of a press molding machine. The visible light (380 to 780 nm) transmittance and near infrared (780 to 250 nm) reflectance of this sheet were measured by means of a spectral photometer. The results are shown in Table 1.

This sheet was attached to the window of a paper box covered with a thermal insulator and having a 40 mm square window in one direction and illuminated with an infrared lamp (185 W) from a distance of 10.5 cm to measure the inside temperature of the box and the temperature of the sheet. The results are shown in Table 1. As a result, it is understood that the resin sheet comprising the heat shielding material of the present invention has high transparency (due to high visible light transmittance) and suppresses a rise in room temperature.

### Example 2

### (preparation of magnesium hydroxide)

Magnesium hydroxide was produced in the same manner as in Example 1 except that 1.6 moles of sodium propionate was used in place of sodium acetate as one of the conditions for producing high-aspect ratio plate-like crystal magnesium hydroxide. As a result of X-ray diffraction, this substance before surface treatment was identified as magnesium hydroxide. As a result of SEM measurement, each crystal was an almost hexagonal plate-like crystal having a thickness of 0. 05 µm and a width of 4.5 µm. Therefore, the aspect ratio was 90. The BET specific surface area was 8.2 m²/g.

### (molding of sheet)

The obtained granulated product was molded into a sheet in the same manner as in Example 1 to carry out a heat shielding test. The results are shown in Table 1. It is understood that the same tendency as in Example 1 was obtained in Example 2.

### Comparative Example 1

The results of a heat shielding test which was carried out in the same manner as in Example 1 after commercially available magnesium hydroxide (thickness of 0.3 µm, width of 0.9 µm, BET specific surface area of 6 m²/g, aspect ratio of 3) was surface treated with sodium stearate in the same manner as in Example 1 are shown in Table 1. It is obvious from Table 1 that the commercially available magnesium hydroxide has low transparency and is inferior in near infrared reflectance and heat shielding properties to the heat shielding material of the present invention.

### Comparative Example 2

An LLDPE sheet was manufactured in the same manner as in Example 1 except that a commercially available pearl pigment-based heat shielding material in which titanium oxide was formed on the surface of mica having a width of about 15 µm was used. The evaluation results of the sheet are shown in Table 1. It is obvious from Table 1 that this commercially available heat shielding material has low transparency.

**Table 1**

| | Visible light transmittance (%) | near infrared reflectance (%) | heat shielding test | |
|---|---|---|---|---|
| | | | Inside temperature of box (°C) | sheet surface temperature (°C) |
| Ex. 1 | 55.4 | 29.6 | 61.8 | 65.6 |
| Ex. 2 | 57.1 | 32.5 | 60.2 | 64.1 |
| C. Ex. 1 | 43.9 | 26.4 | 64.3 | 69.6 |
| C. Ex. 2 | 27.5 | 41.5 | 59.4 | 63.8 |
| Control (containing no heat shielding material) | 82.0 | 7.5 | 71.2 | 67.9 |

| | | | | |
|---|---|---|---|---|
| Ex.: Example C.Ex. : Comparative Example | | | | |

### Effect of the Invention

The heat shielding material of the present invention is excellent in infrared reflecting ability and visible light transmission. Further, the resin composition of the present invention and a molded article thereof are excellent in transparency and have a high-quality appearance with excellent surface gloss.

### Industrial Feasibility

The heat shielding material of the present invention can be used for any application for the purpose of heat shielding. For example, it can be used as a heat shielding film to be affixed to the windows of houses and cars, thermal barrier paint to be used for roofs, an agricultural heat shielding film or sheet for adjusting the inside temperature of a greenhouse, or a resin molded article such as furniture for outdoor use.

## Claims

1. A heat shielding material comprising high-aspect ratio plate-like crystal magnesium hydroxide having a crystal width of not less than 1 µm and a crystal thickness of not more than 0.2 µm as an effective component.

2. The heat shielding material according to claim 1, wherein the high-aspect ratio plate-like crystal magnesium hydroxide has a width of not less than 2 µm and a thickness of not more than 0.1 µm.

3. The heat shielding material according to claim 1, wherein the high-aspect ratio plate-like crystal magnesium hydroxide has a width of not less than 3 µm and a thickness of not more than 0.1 µm.

4. The heat shielding material according to claim 1, wherein the high-aspect ratio plate-like crystal magnesium hydroxide has a width of not less than 3 µm and a thickness of not more than 0.05 µm.

5. A resin composition comprising 100 parts by weight of a resin and 1 to 50 parts by weight of the heat shielding material of claim 1.

6. A molded article obtained by molding the resin composition of claim 1.

7. The molded article according to claim 6 which is a film.

8. A method of using high-aspect ratio plate-like crystal magnesium hydroxide having a crystal width of not less than 1 µm and a crystal thickness of not more than 0.2 µm as an infrared heat shielding material.
